# EUROPÄISCHE PATENTANMELDUNG

(11) **EP 4 648 311 A1**
(43) Veröffentlichungstag der Anmeldung: **12.11.2025**
(21) Anmeldenummer: 24202664.9
(22) Anmeldetag: 25.09.2024
(51) Int. Cl.: H04B 10/80, G08C 23/00, H02J 50/30

(54) **TRANSPORT- UND LAGERBEHÄLTER MIT DRAHTLOSER FUNKFREIER DATEN- UND ENERGIEÜBERTRAGUNG**

(30) Priorität: 10.05.2024 DE 102024001536
(71) Anmelder: MBDA Deutschland GmbH, 86529 Schrobenhausen (DE); Bayern-Chemie Gesellschaft für flugchemische Antriebe mbH, 84544 Aschau am Inn (DE)
(72) Erfinder: WENDLER, Frank, 82288 Kottgeisering (DE); MUßBACH, Günter, 84544 Aschau am Inn (DE)
(74) Vertreter: Isarpatent

(57) **Zusammenfassung**

Offenbart ist ein Sensorsystem. Das Sensorsystem umfasst eine Ausleseeinheit mit einem Modul zum optischen Übertragen von Daten und einem Modul zum Aussenden von Licht; eine erste Sensoreinheit mit einem Modul zum optischen Übertragen von Daten, einem Modul zum Umwandeln von Licht in elektrische Energie und einem Modul zum Erfassen von Daten; und eine zweite Sensoreinheit mit einem Modul zum Übertragen von Daten und einem Modul zum Erfassen von Daten; wobei die Ausleseeinheit und die erste Sensoreinheit voneinander getrennt sind, und die erste Sensoreinheit und die zweite Sensoreinheit voneinander trennbar sind; und das Sensorsystem konfiguriert ist zum: Aussenden von Licht an die erste Sensoreinheit, Umwandeln des Lichts in elektrische Energie; Erfassen von Daten durch die erste Sensoreinheit und/oder die zweite Sensoreinheit unter Verwendung der elektrischen Energie; und optischen Übertragen der Daten von der ersten Sensoreinheit zur Ausleseeinheit unter Verwendung der elektrischen Energie.

## Beschreibung

### TECHNISCHES GEBIET DER ERFINDUNG

Die Erfindung betrifft Systeme mit Vorrichtungen, die zur drahtlosen und funkfreien Übertragung von Daten und Energie ausgestattet und konfiguriert sind. Insbesondere betrifft die Erfindung einen Transport- und/oder Lagerbehälter sowie ein Lagergut, die mit einem Sensorsystem versehen sind. Das Sensorsystem ermöglicht ein Überwachen eines Lagerguts ohne Entnahme des Lagerguts aus dem Transport- und/oder Lagerbehälter. Der Transport- und/oder Lagerbehälter ist durchlässig für Daten und/oder Energie. Das Sensorsystem umfasst eine Ausleseeinheit, die konfiguriert ist, um eine Vielzahl von funkfrei miteinander koppelbaren Sensoreinheiten des Sensorsystems durch ein Aussenden von Licht mit einer entsprechender Energie zu versorgen, wobei zumindest eine Sensoreinheit der Vielzahl von funkfrei miteinander koppelbaren Sensoreinheiten konfiguriert ist, um erfasste Messwerte wiederum mittels Licht an die Ausleseeinheit zu senden, unter Verwendung der entsprechenden Energie.

### TECHNISCHER HINTERGRUND

In explosionsgefährdeten Umgebungen ist der Einsatz von Funktechnologien nur sehr eingeschränkt oder überhaupt nicht möglich, da deren Einsatz zu einer erhöhten Explosionsgefahr führen kann. Beispielsweise kann der Einsatz von Funktechnologien in Produktionsstätten, Lagern, Werkstätten im pyrotechnischen Umfeld, oder chemischen Betrieben, wie beispielsweise der Erdölverarbeitenden Industrie sehr eingeschränkt oder überhaupt nicht möglich sein.

Die Verwendung von Funktechnologien kann ferner auch hinsichtlich der elektromagnetischen Verträglichkeit (EMV), hinsichtlich elektrostatischer Entladung (electrostatic discharge, ESD), oder hinsichtlich der Datensicherheit kritisch sein. Beispielsweise kann der Einsatz von Funktechnologien die Störanfälligkeit eines Systems erhöhen, die Abhörsicherheit eines Systems verringern oder die Anfälligkeit für unerlaubten Zugriff erhöhen, beispielsweise durch Hacking oder Hijacking. Funkwellen lassen sich in der Regel nur schwer räumlich begrenzen. Für große Entfernungen ist eine Übertragung von Daten oder Energie mittels Funkwellen aufgrund deren keulenartigen Ausbreitungscharakteristika überdies ineffizient.

Es kann ferner erforderlich sein, Messwerte von oder aus Komponenten zu erfassen, welche über eine eingeschränkte Zugänglichkeit verfügen. Draht- oder leitungsgebundene Lösungen, oder andere Lösungen, die beispielsweise Durchführungen erfordern, sind nachteilhaft, da eine oder mehrere Funktionen der überwachten Komponenten durch derartige Lösungen beeinträchtigt werden, die strukturelle Integrität von Komponenten oder Subkomponenten beeinträchtigt werden und/oder ein Wartungsaufwand erhöht werden kann. Beispielsweise sind für dichte Behälter Durchführungen von Kabeln kritisch, da Durchführungen zu Undichtigkeiten führen können. Beispiele von möglichen kritischen Anwendungen betreffen die Antriebstechnik, Vakuumtechnik oder Gasgeneratoren, wie beispielsweise in Airbags verwendet, bewegte Behälter, wie beispielsweise Räder und verfahrenstechnische Anlagen. Auch sich schnell bewegende Systeme, räumlich entfernte und/oder verteilte Systeme oder vibrierende System wie beispielsweise Fluggeräte, Weltraumgefährte, Unterwassergefährte oder Großanlagen im Bergbau sind regelmäßig schwer zugänglich.

Steckverbindungen weisen gleiche oder ähnliche Nachteile wie beispielsweise draht- oder leitungsgebundene Lösungen auf. Steckverbindungen können die strukturelle Integrität von Komponenten oder Subkomponenten verringern. Zudem oder alternativ können Steckverbindungen mechanisch empfindlich sein und/oder die Wahrscheinlichkeit einer Fehlmanipulation oder von fehlerhaften Kopplungen erhöhen. Beispielsweise kann eine Steckverbindung durch einen Schock oder durch Vibrationen mechanisch gelöst und ihre Funktion dadurch beeinträchtigt werden.

Das Erfassen von Messwerten erfordert ferner Energie. Geschlossene und/oder gekapselte Systeme sind auf eine oder mehrere Batterien, Akkumulator und/oder eine stationäre Stromversorgung angewiesen. Die Möglichkeit Batterien oder Akkumulatoren zu ersetzen ist in Anwendungen wie beispielsweise in der Raumfahrt oder in stationären Unterwassersystemen nur sehr eingeschränkt oder überhaupt nicht möglich. Die Lebensdauer des versorgten Systems kann durch die Lebensdauer einer Batterie und/oder deren Kapazität eingeschränkt oder begrenzt sein. Dies führt zu einer erhöhten Wartungsintensität des Systems durch die Notwendigkeit eines regelmäßigen Batterietausches. Batterien und Akkumulatoren stellen zudem regelmäßig ein Risiko für ein System dar, da die darin beinhalteten Stoffe zur chemischen Energiespeicherung Korrosion an der Batterie oder dem Akkumulator und/oder im System hervorrufen können. Batterien oder Akkumulatoren können ferner die Wahrscheinlichkeit eines Brandes erhöhen. Im Falle eines Brandes werden die Folgen durch Batterien verstärkt.

Es besteht daher ein Bedürfnis Energie und Daten drahtlos ohne Funkwellen zu übertragen, um eine Lösung für eines oder mehrere der oben genannten Probleme in einem oder in mehreren der oben genannten Anwendungsbereiche bereitzustellen.

Insbesondere soll ein Lagerbehälter bereitgestellt werden, welches eine drahtlose und funkfreie Überwachung ermöglicht, wobei der Lagerbehälter und/oder das in dem Lagerbehälter gelagerte Lagergut Gegenstand der Überwachung sind. Bevorzugt sind Lösungen, welche eine sichere und zuverlässige Überwachung des Lagerguts und/oder von Subsystemen des Lagerguts und/oder von Parametern des Lagerguts ermöglichen, welche bspw. einen Status einer Einsatzbereitschaft des Lagerguts definieren. Ein Überwachen des Treibstoffs für Feststoffraketen oder Motoren ist auch möglich. Weitere Lösungen betreffen Systeme, welche ein Programmieren und/oder ein Konfigurieren eines Lagerguts ermöglichen, um dieses bspw. für eine Verwendung zu programmieren und /oder zu konfigurieren.

Aus dem Stand der Technik sind verschiedene Technologien zum drahtlosen Übertragen von Daten oder zum drahtlosen Übertragen von Energie bekannt.

Zur drahtlosen Übertragung von Daten sind Technologien zur optischen Datenübertragung mit Licht bekannt, wie bspw. Light Fidelity (LiFi), Infrared Data Association (IrDA) oder die Übertragung von Daten mittels eines Lasers. Die Technologien beruhen auf dem Prinzip, dass ein Modulator an einem Sender eine Lichtquelle den zu übertragenden Daten entsprechend ein- und ausschaltet, während eine Fotodiode am Empfänger das empfange Licht in elektrische Impulse umwandelt, welche den übertragenen Daten entsprechen.

Zur Übertragung von Energie werden normalerweise Kabel oder Leitungen verwendet. Zur draht- oder kabellosen Übertragung von Energie sind Nah- und Fernfeld-Technologien bekannt. Beispielsweise kann Energie über eine nichtresonante induktive Kopplung zwischen zwei oder über eine resonante induktive Kopplung zwischen einer Spule und einem Resonanzkreis übertragen werden. Die Verwendung von mehreren Spulen und/oder Resonanzkreis ist ebenfalls möglich. In analoger Weise kann Energie auch draht- oder kabellos über eine kapazitive Kopplung übertragen werden. Überdies ist die Umwandlung von Licht in elektrische Energie mittels Solarzellen und hieraus die Übertragung eines Lichtstrahls von einer Lichtquelle zu einer Solarzelle zur draht- oder kabellosen Übertragung von Energie bekannt.

Eine Kombination aus drahtloser, funkwellenfreier Daten- und EnergieÜbertragung ist aus dem Stand der Technik jedoch nicht bekannt.

EP 0 806 636 A1 offenbart eine Vorrichtung zum Erfassen eines Flüssigkeitspegels in einem Behälter, umfassend ein Gehäuse, das geeignet ist, in dem Behälter angeordnet zu werden; einen Schwimmer mit einem zugeordneten Magnetelement, wobei die Schwimmerposition dem Flüssigkeitspegel im Behälter entspricht; einen innerhalb des Gehäuses angeordneten magnetostriktiven Sensor; und ein Messstab, der innerhalb des Gehäuses angeordnet ist. Der magnetostriktive Sensor und der Messstab sind jeweils betreibbar, um die Schwimmerposition zu bestimmen.

DE 40 24 843 A1 offenbart einen abgesetzten Sensor, der über Glasfasern mit einer Auswerteeinheit verbunden ist. Als Energiequelle dient ein Halbleiterlaser hoher Leistung, dessen Strahlung im Sensor mittels Solarzellen umgewandelt wird. Energieübertragung und Datenübertragung erfolgen über zwei getrennte Glasfasern oder über eine einzige im Zeitmultiplex bzw. Wellenlängenmultiplex.

### ZUSAMMENFASSUNG DER ERFINDUNG

Die Erfindung ist durch die unabhängigen Ansprüche definiert. Die abhängigen Ansprüche definieren vorteilhafte Ausführungsformen
Eine der Aufgaben der Erfindung besteht darin, ein Sensorsystem bereitzustellen, welches eines oder mehrere der oben genannten Probleme in einem oder in mehreren der oben genannten Anwendungsbereiche löst.

Die Technologie soll insbesondere geeignet sein eine Vielzahl von Sensoreinheiten mit Hilfe einer Übertragung von Energie in Form von Licht mit elektrischer Energie zu versorgen, so dass zumindest eine Sensoreinheit der Vielzahl von Sensoreinheiten erfasste Messwerte wiederum mittels Licht an eine Ausleseeinheit senden kann. Die Technologie kann auch dazu verwendet werden, um einen Energiespeicher wie beispielsweise einen elektrochemischen oder physikalischen Energiespeicher zu laden. Ein Wechselintervall eines elektrochemischen Energiespeichers, beispielsweise einer Batterie und/oder eines Akkumulators, kann dadurch verringert oder hinfällig werden. In analoger Weise kann eine Lebensdauer eines Energiespeichers verlängert werden. Ein Betrieb der Sensoreinheit ohne betriebsbereiten Energiespeicher, beispielsweise aufgrund eines Defekts eines Energiespeichers oder weil die Sensoreinheit keinen Energiespeicher umfasst, kann durch die Technologie ermöglicht werden.

Gemäß einem ersten Aspekt der Erfindung umfasst ein Sensorsystem eine Ausleseeinheit mit einem Modul zum optischen Übertragen von Daten und einem Modul zum Aussenden von Licht; eine erste Sensoreinheit mit einem Modul zum optischen Übertragen von Daten, einem Modul zum Umwandeln von Licht in elektrische Energie und einem Modul zum Erfassen von Daten; und eine zweite Sensoreinheit mit einem Modul zum Übertragen von Daten und einem Modul zum Erfassen von Daten; wobei die Ausleseeinheit und die erste Sensoreinheit voneinander getrennt sind, und die erste Sensoreinheit und die zweite Sensoreinheit voneinander trennbar sind; und das Sensorsystem konfiguriert ist zum: Aussenden von Licht an die erste Sensoreinheit, Umwandeln des Lichts in elektrische Energie; Erfassen von Daten durch die erste Sensoreinheit und/oder die zweite Sensoreinheit unter Verwendung der elektrischen Energie; und optischen Übertragen der Daten von der ersten Sensoreinheit zur Ausleseeinheit unter Verwendung der elektrischen Energie.

Gemäß einem zweiten Aspekt der Erfindung weist eine erste Sensoreinheit ein Modul zum optischen Übertragen von Daten, ein Modul zum Umwandeln von Licht in elektrische Energie und ein Modul zum Erfassen von Daten auf; wobei die erste Sensoreinheit konfiguriert ist zum: Empfangen von Licht von einer Ausleseeinheit; Umwandeln des Lichts in elektrische Energie; Erfassen von Daten durch die erste Sensoreinheit unter Verwendung der elektrischen Energie und/oder Empfangen von Daten von einer zweiten Sensoreinheit unter Verwendung der elektrischen Energie; und optischen Übertragen der Daten von der ersten Sensoreinheit zur Ausleseeinheit unter Verwendung der elektrischen Energie. Die Ausleseeinheit und die erste Sensoreinheit sind voneinander getrennt, und die erste Sensoreinheit und die zweite Sensoreinheit sind voneinander trennbar.

Gemäß einem zweiten Aspekt der Erfindung weist eine zweite Sensoreinheit ein Modul zum Übertragen von Daten und ein Modul zum Erfassen von Daten auf; wobei die zweite Sensoreinheit konfiguriert ist zum: Empfangen von elektrische Energie über eine erste Sensoreinheit; Erfassen von Daten durch die zweite Sensoreinheit unter Verwendung der elektrischen Energie; Senden der Daten an die erste Sensoreinheit unter Verwendung der elektrischen Energie zum optischen Übertragen der Daten von der ersten Sensoreinheit zu einer Ausleseeinheit unter Verwendung der elektrischen Energie;

Gemäß einem vierten Aspekt der Erfindung umfasst ein Verfahren zum Betreiben des Sensorsystems die folgenden Schritte: Aussenden von Licht an die erste Sensoreinheit, Umwandeln des Lichts in elektrische Energie; Erfassen von Daten durch die zweite Sensoreinheit unter Verwendung der elektrischen Energie; und bidirektionales optisches Übertragen von Daten zwischen der ersten Sensoreinheit und der Ausleseeinheit unter Verwendung der elektrischen Energie.

Gemäß einem fünften Aspekt der Erfindung weist ein System das Sensorsystem auf. Ferner weist das System einen Transport- und/oder Lagerbehälter auf, der zum Lagern eines Lagerguts konfiguriert ist, wobei der Transport- und/oder Lagerbehälter die erste Sensoreinheit umfasst; und/oder das System weist das Lagergut auf, wobei das Lagergut die zweite Sensoreinheit umfasst.

Vorteilhafte Ausgestaltungen und Weiterbildungen ergeben sich aus den abhängigen Ansprüchen sowie aus der Beschreibung unter Bezugnahme auf die Figuren.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### KURZE INHALTSANGABE DER FIGUREN

Die vorliegende Erfindung wird nachfolgend anhand der in den schematischen Figuren angegebenen Ausführungsbeispiele näher erläutert.
Fig. 1 zeigt eine beispielhafte Ausführungsform eines Sensorsystems mit einer Ausleseeinheit und einer Vielzahl von Sensoreinheiten.
Fig. 2 zeigt eine beispielhafte Ausführungsform eines Verfahrens zum Betreiben eines Sensorsystems zum Überwachen eines Systems.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

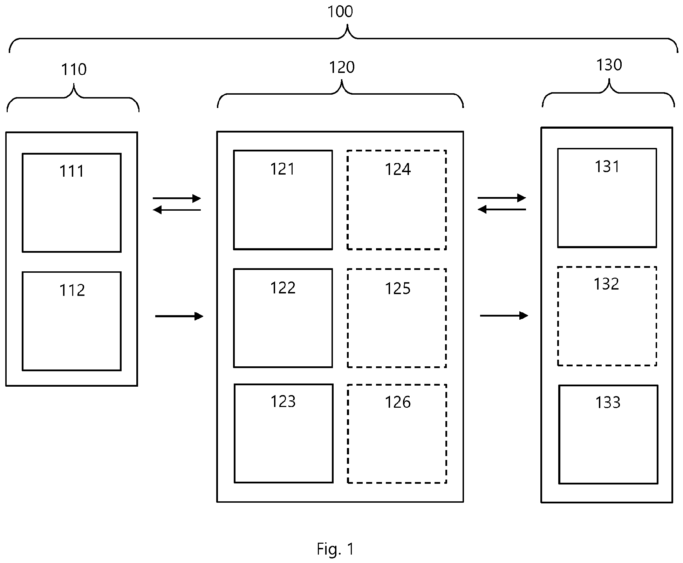

Fig. 1 zeigt eine schematische Darstellung einer beispielhaften Ausführungsform eines Sensorsystems 100. Das Sensorsystem 100 umfasst eine Ausleseeinheit 110 und eine erste Sensoreinheit 120. Das Sensorsystem 100 kann ferner eine zweite Sensoreinheit 130 umfassen oder mit dieser gekoppelt sein. Zwischen der Ausleseeinheit 110 und der ersten Sensoreinheit 120 besteht keine physikalische Verbindung. Sie sind physisch voneinander getrennt. Die Ausleseeinheit 110 und die erste Sensoreinheit 120 sind galvanisch voneinander getrennt. Das Sensorsystem 100 kann keine Steckverbindungen umfassen, um die Ausleseeinheit 110 und die Sensoreinheit 120 miteinander zu verbinden.

Auch zwischen der ersten Sensoreinheit 120 und der zweiten Sensoreinheit 130 kann keine physikalische Verbindung bestehen. Sie können voneinander getrennt sein. Die erste Sensoreinheit 120 und die zweite Sensoreinheit 130 können aber drahtlos mittels Funktechnologie oder Induktion oder auch drahtgebunden miteinander verbunden sein, um ein Übertragen von Daten und/oder von Energie zu ermöglichen. Eine optische Verbindung ist jedoch bevorzugt. Die Drahtverbindung kann trennbar sein, bspw. eine Steck- oder eine Kontaktverbindung sein, um eine erste Einheit, welche die erste Sensoreinheit 120 umfasst, und eine zweite Einheit, welche die zweite Sensoreinheit 130 umfasst, voneinander zu trennen. Die erste Einheit kann bspw. ein Transport- und/oder Lagerbehälter sein. Die zweite Einheit kann bspw. ein Lagergut sein, das in dem Transport- und/oder Lagerbehälter transportiert und/oder gelagert wird.

Die Ausleseeinheit 110 umfasst ein Modul 111 zum optischen Übertragen von Daten (Sendeempfängermodul). Das optische Übertragen von Daten kann bidirektional erfolgen. Bspw. kann das optische Übertragen von Daten ein Senden von ersten Daten und ein Empfangen von zweiten Daten umfassen. Die Ausleseeinheit 110 kann ferner ein Modul 112 zum Aussenden von Licht (Lichtmodul) umfassen. Die beiden Module können räumlich voneinander getrennt sein. Beispielsweise kann das Lichtmodul 112 autark sein und in der Umgebung eines zu überwachenden Systems oder einer zu überwachenden Einheit angeordnet sein. Die Ausleseeinheit 110 kann ein oder mehrere weitere Module (nicht gezeigt) wie bspw. ein Speichermodul oder einen Prozessor umfassen, der konfiguriert ist, um das nachfolgend beschriebene Verfahren in der ersten Sensoreinheit 120 durchzuführen.

Die erste Sensoreinheit 120 kann im Betrieb räumlich von der Ausleseeinheit 110 getrennt sein oder werden. Die erste Sensoreinheit 120 ist zum Betrieb ohne Funktechnologie konfiguriert. Die erste Sensoreinheit 120 muss keinen elektrochemischen oder physikalischen Energiespeicher enthalten, der die Energieversorgung der ersten Sensoreinheit 120 sicherstellt, wenn keine externe Versorgung durch Licht gegeben ist.

Die erste Sensoreinheit 120 umfasst ein Modul 121 zum optischen Übertragen von Daten (Sendeempfängermodul), ein Modul 122 zum Umwandeln von Licht in elektrische Energie (Solarmodul), und ein Modul 123 zum Erfassen von Daten. Die erste Sensoreinheit 120 kann aus den Modulen 121 bis 123 bestehen. Das Modul 123 zum Erfassen von Daten umfasst einen Sensor. Mehrere Sensoren sind auch möglich. Die erste Sensoreinheit 120 kann auch ein Modul 124 zum Speichern von Daten (Datenspeicher, optional) oder ein Modul 125 zum Speichern von Energie (Energiespeicher, optional) oder ein oder mehrere weitere Module 126 umfassen.

Der Energiespeicher 125 kann zum Betreiben der ersten Sensoreinheit 120 nicht erforderlich sein. Ein Energiespeicher 125 ist zum Betreiben der Sensoreinheit nicht zwingend erforderlich. Die erste Sensoreinheit 120 kann zu einem passiven Betrieb konfiguriert sein. Das eine oder die mehreren weiteren Module können einen Prozessor umfassen, der konfiguriert ist, um das nachfolgend beschriebene Verfahren in der erste Sensoreinheit 120 durchzuführen.

Der Energiespeicher 125 basiert entweder auf den Prinzipien der elektrochemischen oder physikalischen Energiespeicherung. Darunter zu verstehen sind beispielsweise Batterien und Akkumulatoren (elektrochemisch) oder Kondensatoren, Spulen, Drallräder etc. (physikalisch). Gemäß einer Ausführungsform umfasst die erste Sensoreinheit 120 einen elektrochemischen Energiespeicher 125, wobei die erste Sensoreinheit 120 zum Laden des elektrochemischen Energiespeichers 125 konfiguriert ist, unter Verwendung der an die erste Sensoreinheit 120 übertragenen Energie.

Die zweite Sensoreinheit 130 kann ein Modul 131 zum optischen oder drahtgebundenen Übertragen von Daten (Sendeempfängermodul), ein optionales Modul 132 zum Umwandeln von Licht in elektrische Energie (Solarmodul), und ein Modul 133 zum Erfassen von Daten umfassen. Die zweite Sensoreinheit 130 kann aus den Modulen 131 und 133 bestehen. Das Modul 133 zum Erfassen von Daten umfasst einen Sensor. Mehrere Sensoren sind auch möglich. Analog zur ersten Sensoreinheit 120 kann auch die zweite Sensoreinheit 130 ein Modul zum Speichern von Daten (Datenspeicher, optional) oder ein Modul zum Speichern von Energie (Energiespeicher, optional) oder ein oder mehrere weitere Module umfassen, wie mit Bezug zur ersten Sensoreinheit 120 beschrieben.

Das Modul 124 zum Speichern von Daten kann zum Speichern von Daten von Daten von den Sensoren der ersten Sensoreinheit 120 und von Daten von den Sensoren der zweiten Sensoreinheit 120 konfiguriert sein. Das Modul 124 zum Speichern von Daten kann das einzige Modul zum Speichern von Daten sein, welches in der ersten Sensoreinheit 120 und der zweiten Sensoreinheit 120 enthalten ist.

Der Energiespeicher 125 kann zum Speichern Energie für zum Betreiben von sowohl der ersten Sensoreinheit 120 als auch der zweiten Sensoreinheit 120 konfiguriert sein. Der Energiespeicher 125 kann das einzige Modul zum Speichern von Energie sein, welches in der ersten Sensoreinheit 120 und der zweiten Sensoreinheit 120 enthalten ist.

Das Sensorsystem 100 kann es ermöglichen, dass das überwachte System oder die überwachte Einheit in einer autarken, gekapselten, oder versiegelten Umgebung verbleiben kann, sofern von außen ein Sichtkontakt zum überwachten System besteht. Beispielsweise kann ein Sichtkontakt bestehend, wenn das überwachte System so angeordnet ist, dass es über ein Sichtfenster, direkt oder indirekt, beispielsweise über einen Spiegel, entlang eines Propagationspfades von Licht zugänglich ist. Durch ein Sichtfenster kann Licht auf die erste Sensoreinheit 120 im überwachten System fallen. Die Ausleseeinheit in der Umgebung des überwachten Systems kann die erste Sensoreinheit 120 unter Verwendung eines Lichtmoduls mit elektrischer Energie versorgen.

Das überwachte System und die zum Überwachen eingesetzte erste Sensoreinheit 120 können von weiteren Umwelteinflüssen abgeschirmt sein. Ein Messergebnis kann durch einen Auslesevorgang unverfälscht bleiben, sofern das zum Betreiben der ersten Sensoreinheit 120 ausgesendete Licht das überwachte System nicht beeinflusst.

Das Sensorsystem 120 kann insbesondere in explosionsgefährdeten Bereichen eingesetzt werden, in welchen auf die Verwendung von elektrischen oder magnetischen Feldern verzichtet werden sollte, um eine Explosionsgefahr zu verringern.

Insbesondere kann das Sensorsystem 120 zum Überwachen des Lagerguts und/oder von Subsystemen des Lagerguts und/oder von Parametern des Lagerguts verwendet werden, welche bspw. einen Status einer Einsatzbereitschaft des Lagerguts definieren.

Der Transport- und/oder Lagerbehälter kann einen Lagerungsmodus aufweisen. Der Lagerungsmodus kann ein Überwachen eines Lagerguts wie bspw. einem Flugkörper ermöglichen, bspw. einem Flugkörper einer neuen Generation (NG), der in einem Lager eingelagert wird. Das Lagergut kann in einem Transport- und/oder Lagerbehälter gem. der vorliegenden Offenbarung eingelagert werden.

Der Transport- und/oder Lagerbehälter und/oder das Lagergut können dabei mit einem elektronischen Logbuch ausgestattet sein. Alternativ oder ergänzend kann ein übergeordnetes System das elektronische Logbuch umfassen und/oder mit dem elektronischen Logbuch von einem oder mehreren der darunterliegenden Systeme synchronisiert werden. In einem elektronischen Logbuch können bspw. eine oder mehrere der folgenden Informationen gespeichert werden: wesentliche Ausrüstungsinformationen zur Identifizierung und/oder historische Daten wie bspw. eine Nutzungshistorie wie bspw. Lebenszyklusphasen, Lagerung, Transport, Betrieb, Dauer, Standort, Wartungsaktivitäten. Insbesondere kann in dem elektronischen Logbuch ein Einsatzstatus und/oder eine Vielzahl von Einsatzstati des Lagerguts abgespeichert werden, um einen Einsatz des Lagerguts vorzubereiten, während das Lagergut im Transport- und/oder Lagerbehälter und/oder der Transport- und/oder Lagerbehälter in einem Lager ruht.

Der Transport- und/oder Lagerbehälter kann in einen Speichermodus versetzt werden, um Daten zu speichern, wenn diese auftreten, bspw. zu Beginn einer Lagerphase. Der Transport- und/oder Lagerbehälter und/oder das Lagergut können ein Zustands- und Nutzungsüberwachungssystem (health and usage monitoring system, HUMS) umfassen. Das HUMS kann bspw. zum Erfassen einer Temperatur, und/oder einer Feuchtigkeit, und/oder eines Luftdrucks, und oder einer Vibration und/oder eines Schocks konfiguriert sein. Das HUMS kann zum kontinuierlichen Überwachen, zum Überwachen mit einer Frequenz, bspw. täglich, wöchentlich, oder monatlich, und/oder zum Überwachen auf Anforderung konfiguriert sein. Das Überwachen kann abhängig von einem Status des Transport- und/oder Lagerbehälters und/oder des Lagerguts sein.

Daten, die durch das HUMS gespeichert werden, können bspw. während einer Lagerungsphase und/oder einer Transportphase über den Transport- und/oder Lagerbehälters mittels einer funkfreien Technologie ausgelesen werden, bspw. durch optische Datenübertragung mit Licht, wie bspw. LiFi, IrDA oder die Übertragung von Daten mittels eines Lasers.

Daten, die aus einem HUMS ausgelesen werden können mit bereits vorhandenen historischen Daten kombiniert werden. Bspw. können in einem Logistiksystem für Flugkörper ausgelesen Daten mit Daten über den Flugkörper kombiniert werden. Die ausgelesenen Daten und/oder die kombinierten Daten können in einem Flottenmanagementsystem ausgewertet werden. In Abhängigkeit von einem Ergebnis der Auswertung kann das Flottenmanagementsystem einem Benutzer einen Status und/oder einen Zustand des Flugkörpers melden, um bspw. weitere logistische und/oder operative Entscheidungen zu ermöglichen.

Am Ende einer Lagerphase kann der Transport- und/oder Lagerbehälter in einen anderen Modus gesetzt werden, bspw. in einen Transportmodus und/oder einen Einsatzmodus.

Der Transportmodus kann ein Überwachen eines Lagerguts während eines Transports ermöglichen. Das Lagergut kann zum Transport in einen Transport- und/oder Lagerbehälter gem. der vorliegenden Offenbarung eingelagert werden.

Wie im Lagerungsmodus kann der Transport- und/oder Lagerbehälter und/oder das Lagergut auch im Transportmodus mit einem elektronischen Logbuch ausgestattet sein. Alternativ oder ergänzend kann ein übergeordnetes System das elektronische Logbuch umfassen und/oder mit dem elektronischen Logbuch von einem oder mehreren der darunterliegenden Systeme synchronisiert werden. In einem elektronischen Logbuch können bspw. eine oder mehrere der folgenden Informationen gespeichert werden: wesentliche Ausrüstungsinformationen zur Identifizierung und/oder historische Daten wie bspw. eine Nutzungshistorie wie bspw. Lebenszyklusphasen, Lagerung, Transport, Betrieb, Dauer, Standort, Wartungsaktivitäten. Insbesondere kann in dem elektronischen Logbuch ein Einsatzstatus und/oder eine Vielzahl von Einsatzstati des Lagerguts abgespeichert werden, um einen Einsatz des Lagerguts vorzubereiten, während das Lagergut im Transport- und/oder Lagerbehälter und/oder der Transport- und/oder Lagerbehälter transportiert wird.

Zu Beginn eines Transports kann der Transport- und/oder Lagerbehälter und/oder das Lagergut in den Transportmodus gesetzt werden. Der Transport- und/oder Lagerbehälter kann in einen Speichermodus versetzt werden, um Daten zu speichern, wenn diese auftreten, bspw. zu Beginn eines Transports. Der Transport- und/oder Lagerbehälter und/oder das Lagergut können auch im Transportmodus ein HUMS umfassen. Das HUMS kann bspw. zum Erfassen einer Temperatur, und/oder einer Feuchtigkeit, und/oder eines Luftdrucks, und oder einer Vibration und/oder eines Schocks konfiguriert sein. Das HUMS kann zum kontinuierlichen Überwachen, zum Überwachen mit einer Frequenz, bspw. täglich, wöchentlich, oder monatlich, und/oder zum Überwachen auf Anforderung konfiguriert sein. Das Überwachen kann abhängig von einem Status und/oder Modus des Transport- und/oder Lagerbehälters und/oder des Lagerguts sein.

Daten, die durch das HUMS gespeichert werden, können bspw. während einer Transportphase und/oder einer Lagerungsphase über den Transport- und/oder Lagerbehälters oder direkt vom Lagergut mittels einer funkfreien Technologie ausgelesen werden, bspw. durch optische Datenübertragung mit Licht, wie bspw. LiFi, IrDA oder die Übertragung von Daten mittels eines Lasers. Die während der Transportphase erfassten Daten können wie die während der Lagerungsphase erfassten Daten aus einem HUMS ausgelesen und wie oben beschrieben kombiniert und/oder weiterverwendet werden.

Am Ende einer Transportphase kann der Transport- und/oder Lagerbehälter in einen anderen Modus gesetzt werden, bspw. in einen Lagerungsmodus und/oder einen Einsatzmodus.

Der Einsatzmodus kann ein Vorbereiten eines Einsatzes des Lagerguts in einer Mission ermöglichen, während das Lagergut in dem verschlossenen Transport- und/oder Lagerbehälter oder außerhalb des Transport- und/oder Lagerbehälters ruht. Eine Kommunikation mit dem Lagergut kann ausschließlich mit Licht in einem oder in mehreren Frequenzbereichen möglich sein. Generell können im Einsatzmodus Daten und/oder Energie zur Vorbereitung des Einsatzes des Lagergutes an das Lagergut übertragen werden, wie oben bspw. mit Bezug zur Fig. 1 beschrieben. In Abhängigkeit von einem Ergebnis einer Datenverarbeitung durch das HUMS kann einem Benutzer mitgeteilt werden, dass das Lagergut für den Einsatz bereit ist oder nicht, oder es können Daten bereitgestellt werden, um bspw. weitere logistische und/oder operative Entscheidungen zu ermöglichen.

Nach der Vorbereitung des Einsatzes kann das Lagergut in einen Bereitschaftsmodus gesetzt werden, bspw. in einen Bereitschaftsmodus einer Vielzahl von Bereitschaftsmodi. In dem Bereitschaftsmodus kann das Lagergut bereit für einen sofortigen Einsatz durch eine Trägerplattform sein, wie bspw. ein Flugzeug, welches zum Tragen eines Flugkörpers konfiguriert ist. In einem Bereitschaftsmodus kann das Lagergut mit Daten zum Durchführen einer Mission bestückt sein, so dass keine weiteren Daten erforderlich sind, um die Mission autonom durchzuführen.

Das Sensorsystem 120 kann, insbesondere mit Bezug zur Lagerungsphase, auch zum Überwachen eines Subsystems des Lagerguts wie bspw. eines Treibstoffs für Feststoffraketen oder Motoren verwendet werden. Beispielsweise kann eine Veränderung der geforderten Eigenschaften von Treibstoff überwacht werden, die aus der Alterung des Treibstoffs resultiert.

Eine Veränderung der geforderten Eigenschaften kann beispielsweise direkt am oder im Treibstoff gemessen werden. Die erste Sensoreinheit 120 kann die Veränderung passiv, also mit oder ohne eigenen Energiespeicher, erfassen. Die Veränderung kann auch automatisch, also ohne externe Steuerung, erfolgen. Die erste Sensoreinheit 120 oder einzelne Module der ersten Sensoreinheit 120, insbesondere das Sensormodul 123 können auf oder in dem Treibstoff platziert werden. Ein oder mehrere Sensoren des Sensormoduls 123 können auf oder in dem Treibstoff platziert werden. Durch ein Platzieren im Treibstoff kann die Präzision der erfassten Messwerte erhöht werden. Das Sensormodul 123 oder der eine oder die mehreren Sensoren erfahren dieselben Umgebungsbedingungen wie der Treibstoff. Der Treibstoff kann dabei auch bereits in einem Motor platziert sein.

Durch das Sensorsystem 100 wird eine Verfolgung von Eigenschaften eines Subsystems des Lagerguts in Echtzeit ermöglicht. Alterungsmodelle können so bspw. in Echtzeit verifiziert werden. Ferner kann die Zuverlässigkeit von Systemen durch die Verwendung des Sensorsystems 100 erhöht werden. Kosten können verringert werden, indem Tests zur Feststellung des Zustands des Systems vermieden werden.

Durch das Übertragen von Daten mittels Licht kann eine Ausbreitung der im Licht enthaltenen Informationen begrenzt werden. Die Informationen können so vor unerwünschtem Zugriff geschützt werden. Beispielsweise kann das Licht fokussiert, gebündelt oder so ausgestrahlt werden, dass in einem seitlichen Abstand zu einer Übertragungslinie zwischen der ersten Sensoreinheit 120 und der Ausleseeinheit 110 kein unerwünschter Zugriff auf die übertragenen Informationen möglich ist. Ein Fokussieren und/oder Bündeln kann beispielsweise mittels eines Lasers, einer Linse und/oder einer Apertur erfolgen. Im Vergleich zu Funkstrecken ist der seitliche Abstand bis zu welchem ein Zugriff auf die Informationen möglich ist, wesentlich verringert. Das Übertragen von Energie kann auf analoge Weise erfolgen. Es ist auch möglich die Lichtausbreitung und somit die Datenübertragung physisch, beispielsweise durch bauliche Maßnahmen wie Röhren, Kanäle usw. zu begrenzen. Durch eine physische Begrenzung durch bauliche Maßnahmen wird eine Abhörmöglichkeit von außen *de facto* ausgeschlossen.

Auch die Begrenzung der Menge an verfügbarer Energie der ersten Sensoreinheit 120 kann die Zugriffsmöglichkeiten auf die erfassten Informationen verringern. Dadurch kann der Schutz vor unerwünschtem Zugriff auf die Informationen weiter erhöht werden.

Durch die Verwendung unterschiedlicher Lichtspektren oder den Ausschluss von Farben können mehrere Übertragungskanäle realisiert oder Übertragungskanale ausgeschlossen werden. Zudem kann durch ein Steuern oder begrenzen einer Intensität des von der ersten Sensoreinheit 120 ausgestrahlten Lichts ein Übertragen von Daten auf eine gewünschte oder voreingestellte Distanz begrenzt werden.

Durch die Verwendung von spezifischen Farben oder spezifischer Bereiche des Spektrums von Licht, beispielsweise mittels optischen Filtern, können Störungen oder unerwünschte Frequenzen durch Licht aus anderen Quellen blockiert oder ausgeschlossen werden. Dadurch kann eine Signalqualität erhöht werden.

Eine erste Sensoreinheit 120 eines Sensorsystems 100 kann in eine erste Einheit wie bspw. ein Transport- und/oder Lagerbehälter integriert sein, während eine zweite Sensoreinheit 130 des Sensorsystems 100 in ein Lagergut integriert sein kann. Das Lagergut kann in dem Transport- und/oder Lagerbehälter transportiert und/oder gelagert werden. Der Transport- und/oder Lagerbehälter kann auf zumindest einer oder zumindest zwei seiner Seitenoberflächen das Modul 122 zum Umwandeln von Licht in elektrische Energie umfassen, um es dem Modul 122 zu ermöglichen, Energie zum Betreiben der ersten Sensoreinheit 120 und/oder der zweiten Sensoreinheit 130 zu erzeugen.

Das Modul 122 zum Umwandeln von Licht kann an den Stellen des Transport- und/oder Lagerbehälters angeordnet sein, welche mit der höchsten Wahrscheinlichkeit einer Lichtquelle ausgesetzt sind oder werden.

Die Ausleseeinheit 110 ist konfiguriert, um Energie mittels Licht auf die erste Sensoreinheit 120 und/oder die zweite Sensoreinheit 130 zu übertragen (optical wireless power transfer, OWPT), wie oben mit Bezug zur Fig. 1 beschrieben. Die zum Betreiben der ersten Sensoreinheit 120 und/oder die zweiten Sensoreinheit 130 erforderliche Energie kann innerhalb einer Zeitdauer von bspw. 1, 2, 5, 10 oder 20 Sekunden durch die Ausleseeinheit 110 an die erste Sensoreinheit 120 und/oder die zweite Sensoreinheit 130 übertragen werden

Das Sensorsystems 100 kann insbesondere so konfiguriert sein, dass Umgebungslicht während einer Stunde (Inspektionszeit) pro Woche (Inspektionsintervall) hinreicht, um die erste Sensoreinheit 120 und/oder die zweite Sensoreinheit 130 während dem Inspektionsintervall zu betreiben. Eine Energieversorgung durch die Ausleseeinheit 110 kann nicht erforderlich sein. Umgebungslicht kann hinreichend sein, um die erste Sensoreinheit 120 und/oder die zweite Sensoreinheit 130 zu betreiben. Ein Betrieb der ersten Sensoreinheit 120 und/oder der zweiten Sensoreinheit 130 kann ermöglicht sein, wenn der Transport- und/oder Lagerbehälter in einer hellen und/oder beleuchteten Umgebung gelagert wird.

Das Lagergut kann über die Ausleseeinheit 110 des Sensorsystems 100 programmiert und/oder konfiguriert werden. So können bspw. Konfigurationsdaten, Missionsdaten, Zustandsinformationen, Kommandos, elektrischer Energie, und/oder archivierte Sensordaten usw. zwischen der Ausleseeinheit 110 und der ersten Sensoreinheit 120 und/oder der zweiten Sensoreinheit 130 übertragen werden. Das Lagergut kann auch mehrere Sensoreinheiten umfassen, die analog zur Sensoreinheit 130 zum Senden und/oder Empfangen von Daten und/oder zum Senden und/oder Empfangen von Energie konfiguriert oder konfigurierbar sind.

Die ersten Sensoreinheit 120, bspw. auf Ebene des Transport- und/oder Lagerbehälters, kann zum Erfassen von einem oder von mehreren von einer Temperatur, einer relativen Feuchtigkeit, einem Luftdruck, einem Schock wie bspw. einer Beschleunigung über einem Schwellenwert, einer Vibration, von Licht in bspw. dem Transport- und/oder Lagerbehälter zum Erfassen eines Öffnens und/oder eines Schließens desselben, einem Ort, von Lageparametern wie bspw. einer Ausrichtung in einem Raum, von atmosphärische Bedingungen im Transport- und/oder Lagerbehälter, usw. konfiguriert sein.

In der zweiten Sensoreinheit 130, bspw. auf Ebene des Lagergutes, können Sensoren vorgesehen oder enthalten sein, welche eine Lebenszyklusüberwachung ermöglichen, die nicht durch die in der ersten Sensoreinheit 120 integrierten Sensoren durchgeführt werden kann, bspw. durch interne Sensoren im Motor eines Flugkörpers. Über die erste Sensoreinheit 120 können die Daten von der zweiten Sensoreinheit 130 drahtlos und funkfrei ausgelesen werden. Es können dabei oder ohne die erste Sensoreinheit 120 auch Daten an eine Ausleseeinheit übertragen werden, welche außerhalb des Transport- und/oder Lagerbehälters erfasst werden, bspw. Daten, die in einem Tragflug erfasst werden oder erfasst worden sind.

Das Sensorsystem 100 kann die Überwachung eines Lagerguts während seiner Lagerzeit und/oder über seinen Lebenszyklus ermöglichen. Unter Lagerzeit sind sämtliche Zeiträume zu verstehen, in denen sich das zu überwachende Lagergut innerhalb des Transport- und/oder Lagerbehälters befindet (bspw. Lagerung, Transport, Bereitstellung usw.). Unter Lebenszyklus ist die gesamte Lebenszeit des Lagergutes oder seiner relevanten Komponenten zu verstehen (bspw. Herstellung, Nutzung, Aussonderung und/oder Verwertung).

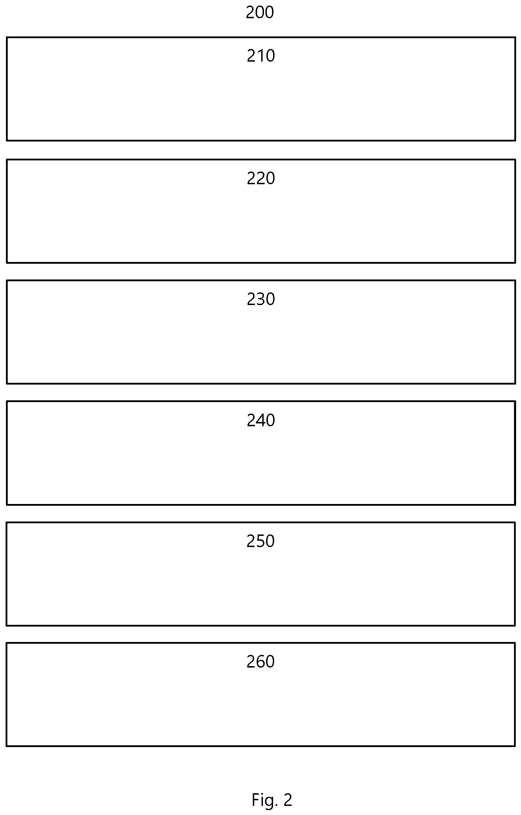

Fig. 2 zeigt eine schematische Darstellung eines Verfahrens 200 zum Betreiben eines Sensorsystems zum Überwachen eines Systems. Ein Schritt umfasst ein Aussenden 210 von Licht durch eine Ausleseeinheit 110. Ein Schritt umfasst ein Umwandeln 220 des Lichts in elektrische Energie durch eine erste Sensoreinheit 120. Ein Schritt umfasst ein Erfassen 230 von Daten durch die erste Sensoreinheit 120 unter Verwendung der elektrischen Energie. Ein Schritt umfasst ein optisches Übertragen 240 der Daten von der ersten Sensoreinheit 120 zur Ausleseeinheit 110 unter Verwendung der elektrischen Energie.

Das Verfahren kann weitere Schritte umfassen wie beispielsweise ein Speichern 250 von Energie in der ersten Sensoreinheit 220, sowie ein Speichern 260 von Daten in der ersten Sensoreinheit 220. Weitere Module der Sensoreinheit 220 können konfiguriert sein, um weitere Schritte des Verfahrens durchzuführen, beispielsweise ein Verarbeiten der erfassten Daten.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### BEZUGSZEICHEN

- 100: Sensorsystem
- 110: Ausleseeinheit
- 111: Modul zum optischen Übertragen von Daten (Sendeempfängermodul)
- 112: Modul zum Aussenden von Licht (Lichtmodul)
- 120: erste Sensoreinheit
- 121: Modul zum optischen Übertragen von Daten (Sendeempfängermodul)
- 122: Modul zum Umwandeln von Licht in elektrische Energie (Solarmodul)
- 123: Modul zum Erfassen von Daten (ein oder mehrere Sensoren)
- 124: Modul zum Speichern von Daten (Datenspeicher, optional)
- 125: Modul zum Speichern von Energie (Energiespeicher, optional)
- 126: weiteres Modul / weitere Module (optional)
- 130: zweite Sensoreinheit
- 131: Modul zum optischen Übertragen von Daten (Sendeempfängermodul)
- 132: Modul zum Umwandeln von Licht in elektr. Energie (Solarmodul, optional)
- 133: Modul zum Erfassen von Daten (ein oder mehrere Sensoren)
- 200: Verfahren mit Verfahrensschritten 210 bis 260

## Patentansprüche

1. Sensorsystem (100), umfassend:
eine Ausleseeinheit (110) mit einem Modul (111) zum optischen Übertragen von Daten und einem Modul (112) zum Aussenden von Licht;
eine erste Sensoreinheit (120) mit einem Modul (121) zum optischen Übertragen von Daten, einem Modul (122) zum Umwandeln von Licht in elektrische Energie und einem Modul (123) zum Erfassen von Daten; und
eine zweite Sensoreinheit (130) mit einem Modul (131) zum Übertragen von Daten und einem Modul (133) zum Erfassen von Daten; wobei
die Ausleseeinheit (110) und die erste Sensoreinheit (120) voneinander getrennt sind, und die erste Sensoreinheit (120) und die zweite Sensoreinheit (130) voneinander trennbar sind; und
das Sensorsystem (100) konfiguriert ist zum:
Aussenden (210) von Licht an die erste Sensoreinheit (120),
Umwandeln (220) des Lichts in elektrische Energie;
Erfassen (230) von Daten durch die erste Sensoreinheit (120) und/oder die zweite Sensoreinheit (130) unter Verwendung der elektrischen Energie; und
optischen Übertragen (240) der Daten von der ersten Sensoreinheit (120) zur Ausleseeinheit (110) unter Verwendung der elektrischen Energie.

2. Sensorsystem (100) nach Anspruch 1, wobei:
die erste Sensoreinheit (120) aus dem Modul (121) zum optischen Übertragen von Daten, dem Modul (122) zum Umwandeln von Licht in elektrische Energie und dem Modul (123) zum Erfassen von Daten besteht; und/oder
die zweite Sensoreinheit (130) aus dem Modul (131) zum optischen Übertragen von Daten, und dem Modul (133) zum Erfassen von Daten besteht.

3. Sensorsystem (100) nach Anspruch 1 oder 2, wobei:
die erste Sensoreinheit (120) keinen Energiespeicher umfasst; und/oder
die zweite Sensoreinheit (130) keinen Energiespeicher umfasst.

4. Sensorsystem (100) nach Anspruch 1, wobei das Modul (133) zum Erfassen von Daten der zweiten Sensoreinheit (130) zum Platzieren in einem festen Treibstoff konfiguriert ist und insbesondere einen oder mehrere Sensoren umfasst.

5. Eine erste Sensoreinheit (120) mit einem Modul (121) zum optischen Übertragen von Daten, einem Modul (122) zum Umwandeln von Licht in elektrische Energie und einem Modul (123) zum Erfassen von Daten; wobei
die erste Sensoreinheit (120) konfiguriert ist zum:
Empfangen (210) von Licht von einer Ausleseeinheit (110);
Umwandeln (220) des Lichts in elektrische Energie;
Erfassen (230) von Daten durch die erste Sensoreinheit (120) unter Verwendung der elektrischen Energie und/oder Empfangen von Daten von einer zweiten Sensoreinheit (130) unter Verwendung der elektrischen Energie; und
optischen Übertragen (240) der Daten von der ersten Sensoreinheit (120) zur Ausleseeinheit (110) unter Verwendung der elektrischen Energie; und
die Ausleseeinheit (110) und die erste Sensoreinheit (120) voneinander getrennt sind, und die erste Sensoreinheit (120) und die zweite Sensoreinheit (130) voneinander trennbar sind.

6. Eine zweite Sensoreinheit (130) mit einem Modul (131) zum Übertragen von Daten und einem Modul (133) zum Erfassen von Daten; wobei
die zweite Sensoreinheit (130) konfiguriert ist zum:
Empfangen von elektrischer Energie über eine erste Sensoreinheit (120);
Erfassen (230) von Daten durch die zweite Sensoreinheit (130) unter Verwendung der elektrischen Energie;
Senden der Daten an die erste Sensoreinheit (120) unter Verwendung der elektrischen Energie zum optischen Übertragen (240) der Daten von der ersten Sensoreinheit (120) zu einer Ausleseeinheit (110) unter Verwendung der elektrischen Energie; und
die Ausleseeinheit (110) und die erste Sensoreinheit (120) voneinander getrennt sind, und die erste Sensoreinheit (120) und die zweite Sensoreinheit (130) voneinander trennbar sind.

7. Verfahren (200) zum Betreiben des Sensorsystems (100) nach irgendeinem der Ansprüche 1 bis 3 zum Überwachen eines Systems, wobei das Verfahren umfasst:
Aussenden (210) von Licht an die erste Sensoreinheit (120),
Umwandeln (220) des Lichts in elektrische Energie;
Erfassen (230) von Daten durch die erste Sensoreinheit (120) und/oder die zweite Sensoreinheit (130) unter Verwendung der elektrischen Energie; und
optisches Übertragen (240) der Daten von der ersten Sensoreinheit (120) zur Ausleseeinheit (110) unter Verwendung der elektrischen Energie.

8. Verfahren (200) nach Anspruch 7, wobei das optische Übertragen (240) der Daten von der ersten Sensoreinheit (120) zur Ausleseeinheit (110) unter Verwendung der elektrischen Energie ein Empfangen, durch die erste Sensoreinheit (120), von Daten von der zweiten Sensoreinheit (130) unter Verwendung der elektrischen Energie umfasst.

9. Verfahren (200) nach Anspruch 7 oder 8, wobei das Erfassen (230) von Daten durch die zweite Sensoreinheit (130) unter Verwendung der elektrischen Energie ein Empfangen von elektrischer Energie über eine erste Sensoreinheit (120) umfasst.

10. System aufweisend das Sensorsystem (100) nach irgendeinem der Ansprüche 1 bis 4, wobei das System ferner aufweist:
einen Transport- und/oder Lagerbehälter, der zum Lagern eines Lagerguts konfiguriert ist, wobei der Transport- und/oder Lagerbehälter die erste Sensoreinheit (120) umfasst; und/oder
das Lagergut, wobei das Lagergut die zweite Sensoreinheit (130) umfasst.
